# EUROPEAN PATENT APPLICATION

(11) **EP 4 560 753 A1**
(43) Date of publication of application: **28.05.2025**
(21) Application number: 24188603.5
(22) Date of filing: 15.07.2024
(51) Int. Cl.: H01M 10/04, H01M 10/0585

(54) **SECONDARY BATTERY MANUFACTURING APPARATUS AND SECONDARY BATTERY MANUFACTURING METHOD USING THE SAME**

(30) Priority: 24.11.2023 KR 20230165766
(71) Applicant: SAMSUNG SDI CO., LTD., Giheung-gu Yongin-si, Gyeonggi-do 17084 (KR)
(72) Inventor: Im, Ho Bin, 16678 Suwon-si, Gyeonggi-do (KR); Ki, Dae Wook, 16678 Suwon-si, Gyeonggi-do (KR)
(74) Representative: Gulde & Partner

(57) **Abstract**

A secondary battery manufacturing apparatus and a secondary battery manufacturing method using the same are disclosed. A secondary battery manufacturing apparatus includes a supply unit configured to supply an electrode plate, a stack table spaced apart from the supply unit and on which the electrode plate is configured to be stacked, a transfer unit movably arranged outside the supply unit and the stack table and configured to transfer the electrode plate supplied from the supply unit to the stack table, a sensing unit configured to sense defects in the electrode plate transferred by the transfer unit, a discharge unit between the supply unit and the stack table and configured to discharge the electrode plate from the transfer unit, and a controller configured to control operations of the transfer unit and the discharge unit based on information sensed by the sensing unit.

## Description

### BACKGROUND

### 1. Field

Aspects of embodiments of the present disclosure relate to a secondary battery manufacturing apparatus and a secondary battery manufacturing method using the same.

### 2. Discussion of Related Art

Generally, with the recent rapid spread of electronic apparatuses using batteries, such as mobile phones, laptop computers, electric vehicles, and the like, the demand for secondary battery having high energy density and high capacity is rapidly increasing. Accordingly, research and development for improving the performance of lithium secondary batteries is actively underway.

A lithium secondary battery is a battery including positive and negative electrodes including an active material in which lithium ions can be intercalated and deintercalated, and an electrolyte, and produces electrical energy due to oxidation and reduction reactions when lithium ions are intercalated/deintercalated into/from the positive electrode and the negative electrode.

Secondary batteries can be classified into a wound type and a stacked type according to a form thereof. The wound type can be manufactured by continuously winding a positive electrode plate, a negative electrode plate, and a separator together. The stacked type can be produced by alternately stacking a positive electrode plate and a negative electrode plate cut to a certain size (e. g., a predetermined size) with a separator therebetween.

The above-described information disclosed in the technology that forms the background of the present disclosure is provided to improve understanding of the background of the present disclosure, and thus may include information that does not constitute the related art.

### SUMMARY

According to aspects of the present disclosure, a secondary battery manufacturing apparatus and a secondary battery manufacturing method capable of discharging defective electrode plates during a process of stacking electrode plates are provided.

The above and other aspects and features of the present disclosure will be described in or will be apparent from the following description of some embodiments of the present disclosure.

According to a first aspect of the disclosure, a secondary battery manufacturing apparatus includes: a supply unit configured to supply an electrode plate; a stack table spaced apart from the supply unit and on which the electrode plate is configured to be stacked; a transfer unit movably arranged outside the supply unit and the stack table and configured to transfer the electrode plate supplied from the supply unit to the stack table; a sensing unit configured to sense defects in the electrode plate transferred by the transfer unit; a discharge unit between the supply unit and the stack table and configured to discharge the electrode plate from the transfer unit; and a controller configured to control operations of the transfer unit and the discharge unit based on information sensed from the sensing unit.

The sensing unit may include an alignment table between the supply unit and the stack table and on which the electrode plate is configured to be seated, and a sensing member arranged to face the alignment table and configured to acquire information of the exterior of the electrode plate seated on the alignment table.

The discharge unit may be between the alignment table and the stack table.

The discharge unit may be between the alignment table and the supply unit.

The discharge unit may include an adjustment member movably arranged between the supply unit and the stack table, a separation member of which a position is variable in conjunction with movement of the adjustment member and configured to separate the electrode plate from the transfer unit, and a collection member spaced apart from the adjustment member and configured to collect the electrode plate separated by the separation member.

The adjustment member may include a first adjustment member arranged between the supply unit and the stack table to be movable up and down, and a second adjustment member rotatably connected to the first adjustment member and configured to support the separation member.

The second adjustment member may be rotatable about a direction crossing an upward and downward movement direction of the first adjustment member.

The separation member may include an adsorption member extending from the second adjustment member and configured to generate vacuum pressure to adsorb the electrode plate.

The adsorption member may include a plurality of adsorption members, and adsorption members of the plurality of adsorption members may be arranged along a longitudinal direction of the second adjustment member.

A cross-sectional area of the adsorption member may become wider toward an end portion thereof.

The adsorption member may be elastically deformable.

The adsorption member may be detachably connected to the second adjustment member.

The collection member may be arranged under the adsorption member. Here and in the following, the term "under" with regard to two objects A and B may be defined such that A is said to be under B, if, when viewing into the direction of the force of gravity, A is positioned behind B.

The collection member may include a collection opening into which the electrode plate dropping from the adsorption member is receivable.

A cross-sectional area of the collection member may increase toward the collection opening.

As the adsorption member rotates a certain angle (e. g., a set angle) while adsorbing the electrode plate transferred by the transfer unit, the collection opening may perpendicularly face an end portion of the electrode plate.

The collection opening may be disposed or arranged perpendicular to a direction of gravity.

The controller may operate the transfer unit to be moved to a position where the electrode plate faces the discharge unit when the electrode plate transferred by the transfer unit is determined to be defective.

The controller may move the first adjustment member upward in a state in which the electrode plate is adsorbed to the adsorption member and then may rotate the second adjustment member when a width of the electrode plate crossing a longitudinal direction of the second adjustment member exceeds a certain size (e. g., a set size).

According to a second aspect of the disclosure, a secondary battery manufacturing method includes: supplying, by a supply unit, an electrode plate; transferring, by a transfer unit, the electrode plate supplied from the supply unit; determining whether the electrode plate transferred by the transfer unit is defective; stacking, by the transfer unit, the electrode plate on a stack table when the electrode plate transferred by the transfer unit is determined to be normal; and discharging, by a discharge unit, the electrode plate from the transfer unit when the electrode plate transferred by the transfer unit is determined to be defective.

In accordance with one or more embodiments of the present disclosure, as a discharge unit for discharging a defective electrode plate is located on a transfer path of the electrode plate by a transfer unit, an overall size of equipment can be reduced, and the transfer path of the electrode plate can be efficiently implemented.

In accordance with one or more embodiments of the present disclosure, a drop position and a drop angle of the electrode plate separated from the transfer unit can be adjusted by a first adjustment member, a second adjustment member, and an adsorption member, and the accuracy of introducing the electrode plate into a collection member can be improved.

### BRIEF DESCRIPTION OF THE DRAWINGS

The drawings attached to this specification illustrate some example embodiments of the present disclosure, and further describe aspects and features of the present disclosure together with the detailed description of the present disclosure. However, the present disclosure is not to be construed as being limited to the drawings.
FIG. 1 is a view schematically illustrating a configuration of a secondary battery manufacturing apparatus according to an embodiment of the present disclosure;
FIG. 2 is a block diagram schematically illustrating the configuration of the secondary battery manufacturing apparatus according to an embodiment of the present disclosure;
FIG. 3 is a front view schematically illustrating a configuration of a discharge unit according to an embodiment of the present disclosure;
FIG. 4 is a side view schematically illustrating the configuration of the discharge unit according to an embodiment of the present disclosure;
FIG. 5 is a plan view schematically illustrating the configuration of the discharge unit according to an embodiment of the present disclosure;
FIG. 6 is a flowchart schematically illustrating a sequence of a secondary battery manufacturing method according to an embodiment of the present disclosure;
FIG. 7 is a view schematically illustrating a process by which a transfer unit transfers an electrode plate supplied from a supply unit;
FIG. 8 is a flowchart schematically illustrating a sequence of operations for determining whether the electrode plate transferred by the transfer unit is defective;
FIG. 9 is a view schematically illustrating a process of determining whether the electrode plate transferred by the transfer unit is defective;
FIG. 10 is a view schematically illustrating a process by which the transfer unit stacks the electrode plates on a stack table;
FIG. 11 is a flowchart schematically illustrating a sequence of operations in which a discharge unit discharges the electrode plate from the transfer unit;
FIGS. 12 to 15 are views schematically illustrating a process by which the discharge unit discharges the electrode plate from the transfer unit;
FIGS. 16 to 18 are views schematically illustrating operations when a width of the electrode plate exceeds a certain size in FIG. 13; and
FIG. 19 is a view schematically illustrating a configuration of a secondary battery manufacturing apparatus according to another embodiment of the present disclosure.

### DETAILED DESCRIPTION

Herein, some embodiments of the present disclosure will be described, in further detail, with reference to the accompanying drawings. The terms or words used in this specification and claims should not be construed as being limited to the usual or dictionary meaning and should be interpreted to have meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not necessarily represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer, or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections are not to be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e. g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are the same or substantially the same. Thus, the phrase "the same" or "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part, or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

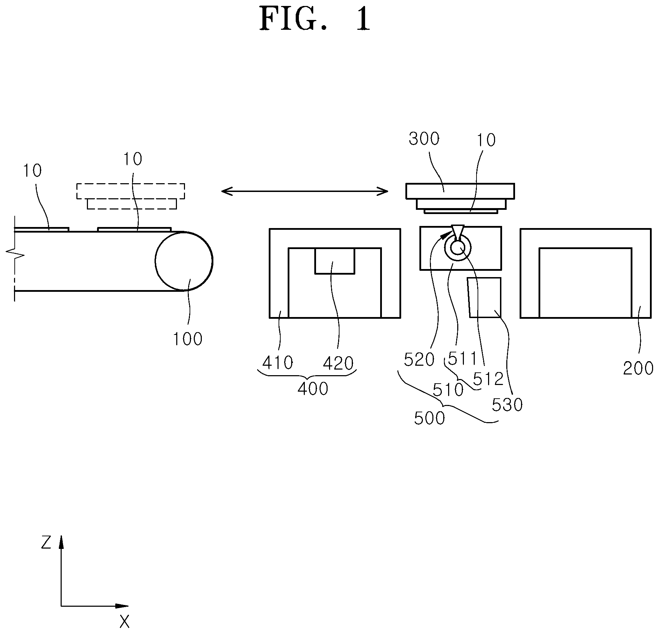

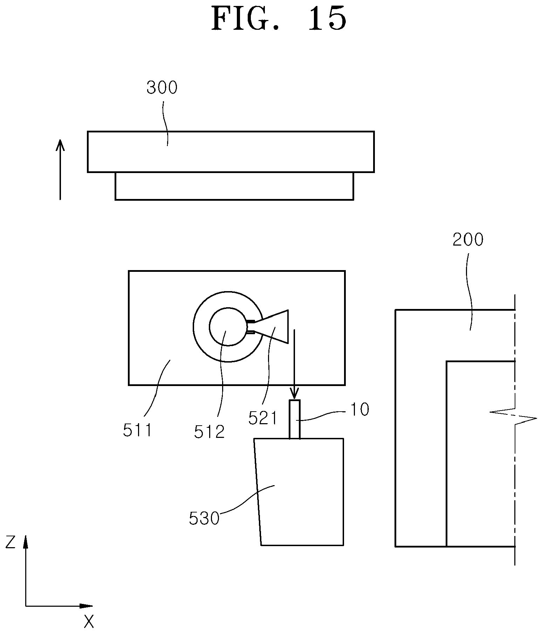

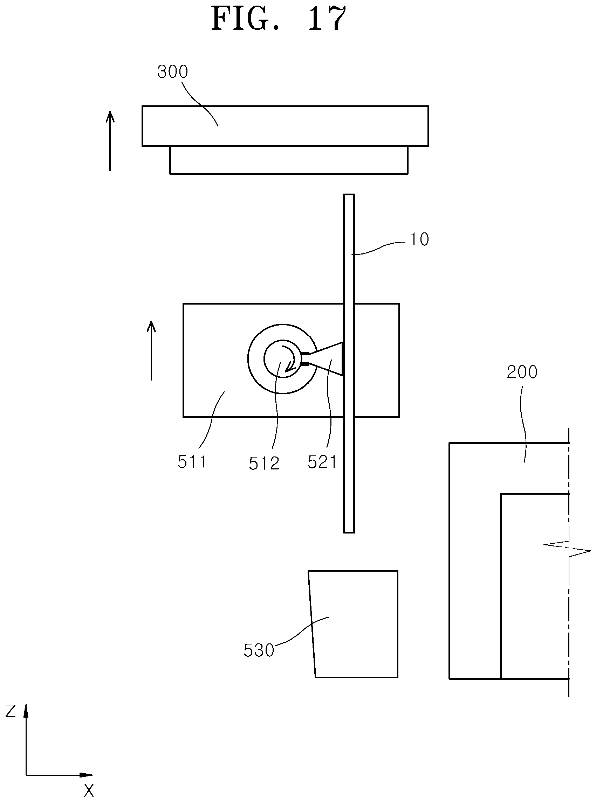

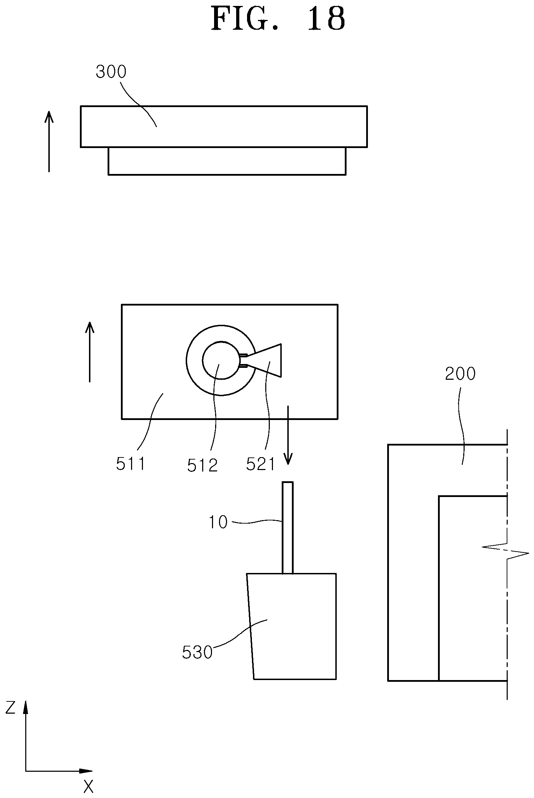

Also, as to the axes of the coordinate system depicted in Figs. 1, 3 to 5, 7, 9, 10, and 12 to 19, the Z-axis may be directed against the force of gravity (in other words, the Z-axis may be orientated upwards), the X-axis may be arranged perpendicular to the Z-axis, and the Y-axis may be arranged perpendicular to the X-axis and to the Z-axis.

The terms used in the present specification are for describing embodiments of the present disclosure and are not intended to limit the present disclosure.

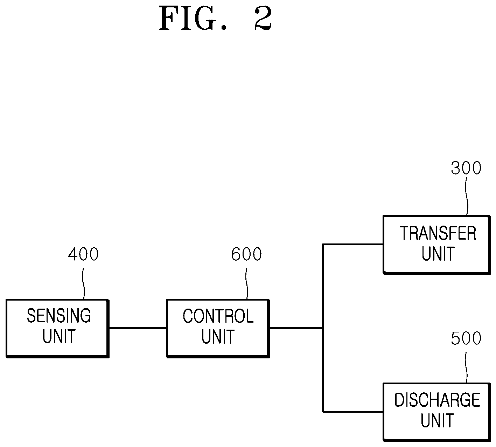

FIG. 1 is a view schematically illustrating a configuration of a secondary battery manufacturing apparatus according to an embodiment of the present disclosure; and FIG. 2 is a block diagram schematically illustrating the configuration of the secondary battery manufacturing apparatus according to an embodiment of the present disclosure.

Referring to FIGS. 1 and 2, a secondary battery manufacturing apparatus according to an embodiment includes a supply unit 100, a stack table 200, a transfer unit 300, a sensing unit 400, a discharge unit 500, and a control unit, or controller, 600.

The supply unit 100 may function as a component which supplies an electrode plate 10. In an embodiment, the supply unit 100 may have the form of a belt conveyor capable of continuously supplying a plurality of electrode plates 10 by a belt rotating in an endless orbit. However, the supply unit 100 is not limited thereto, and a design thereof may be changed to any of various types capable of continuously supplying the plurality of electrode plates 10, such as an electric roller.

The electrode plate 10 supplied by the supply unit 100 may be formed to be cut to a length (e. g., a set length) by a notching process and have a thin foil form. The electrode plate 10 may be formed of a material capable of conducting electricity, such as copper, a copper alloy, nickel, a nickel alloy, aluminum, or an aluminum alloy.

A surface of the electrode plate 10 may be coated with an electrode active material. The electrode active material may be a positive electrode active material capable of reversibly intercalating and deintercalating lithium or a negative electrode active material capable of reversibly intercalating and deintercalating lithium ions. The positive electrode active material may include one or more composite oxides of lithium and a metal selected from cobalt, manganese, nickel, and a combination thereof. The negative electrode active material may include crystalline carbon, amorphous carbon, or a combination thereof.

The stack table 200 may be spaced apart from the supply unit 100, and the electrode plate 10 may be stacked on the stack table 200. That is, the stack table 200 may provide a space in which a stacking process of the electrode plate 10 is performed in the secondary battery manufacturing apparatus.

The stack table 200 may be disposed at a position spaced apart from the supply unit 100 by a distance (e. g., a predetermined distance) along an X-axis direction based on FIG. 1. An upper surface of the stack table 200 may be provided with a seating surface on which the electrode plate may be seated.

In an embodiment, a clamp (not shown), which may press and temporarily fix the electrode plates 10 stacked on the seating surface, may be additionally installed on the seating surface of the stack table 200. In an embodiment, a jig (not shown), which folds a separator (not shown) in a zigzag form, may be additionally installed at an upper side of the stack table 200 before and after stacking the electrode plate 10 by the transfer unit 300 described below.

The transfer unit 300 may be movably installed outside the supply unit 100 and the stack table 200. The transfer unit 300 may transfer the electrode plate 10 supplied from the supply unit 100 to the stack table 200 and the sensing unit 400 described below.

For example, the transfer unit 300 may be disposed above the supply unit 100 and the stack table 200. The transfer unit 300 may be installed to move back and forth along an X-axis, Y-axis, and Z-axis based on FIG. 1. In an embodiment, the transfer unit 300 may form vacuum pressure to adsorb the electrode plate 10 at a lower surface of the transfer unit 300. The transfer unit 300 may transfer the electrode plate 10 by moving while the electrode plate 10 is adsorbed thereto. As the formed vacuum pressure is released, the transfer unit 300 may seat the electrode plate 10 adsorbed to the lower surface of the transfer unit 300 on the stack table 200 or the sensing unit 400. The operation of the transfer unit 300 may be adjusted by control of the control unit 600 described below.

The sensing unit 400 may sense defects in the electrode plate 10 transferred by the transfer unit 300. That is, the sensing unit 400 may function as a component which senses exterior defects in the electrode plate 10, such as bending, wrinkles, damage, and the like, before the electrode plate 10 supplied from the supply unit 100 is stacked on the stack table 200.

In an embodiment, the sensing unit 400 may include an alignment table 410 and a sensing member 420.

The alignment table 410 may be disposed between the supply unit 100 and the stack table 200. For example, the supply unit 100, the alignment table 410, and the stack table 200 may be sequentially arranged along the X-axis direction. The electrode plate 10 transferred by the transfer unit 300 may be seated on the alignment table 410. However, a specific shape of the alignment table 410 is not limited to the shape shown in FIG. 1, and various design changes are possible within the technical concept of a shape capable of providing a space where the electrode plate 10 may be seated between the supply unit 100 and the stack table 200.

The sensing member 420 may acquire information of an exterior of the electrode plate 10 seated on the alignment table 410. In an embodiment, the sensing member 420 may include a vision sensor capable of acquiring the information of the exterior of the electrode plate 10 in the form of a three-dimensional image by photographing the electrode plate 10 seated on the alignment table 410. The sensing member 420 may be disposed to face the alignment table 410. In addition to the position shown in FIG. 1, design changes in which the position of the sensing member 420 is changed to various positions which do not interfere with the movement of the transfer unit 300 and are capable of acquiring the information of the exterior of the electrode plate 10 seated on the alignment table 410 are possible. The sensing member 420 may transmit the acquired information of the exterior of the electrode plate 10 to the control unit 600 described below.

The discharge unit 500 may be provided between the supply unit 100 and the stack table 200 and may selectively discharge the electrode plate 10 from the transfer unit 300. That is, the discharge unit 500 may function as a component which discharges the electrode plate 10 from the transfer unit 300 when defects are sensed in the electrode plate 10 by the sensing unit 400. In an embodiment, the discharge unit 500 may be disposed between the alignment table 410 and the stack table 200.

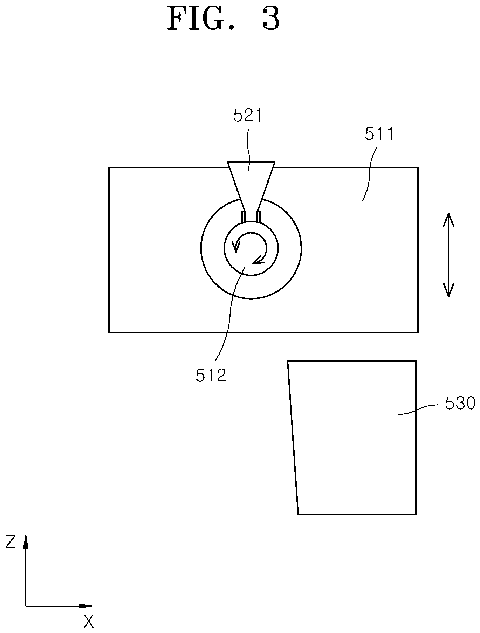

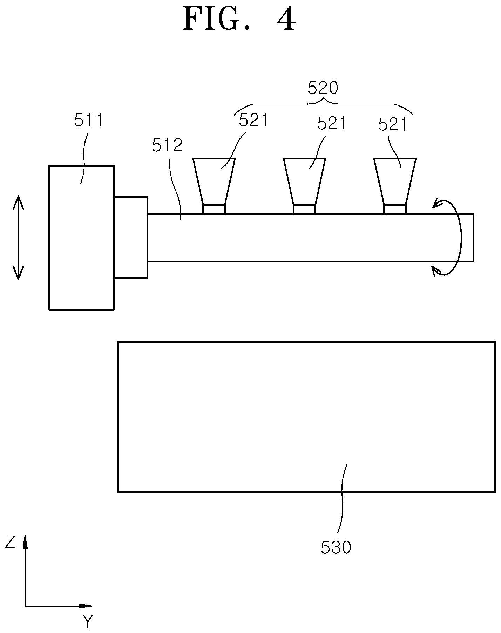

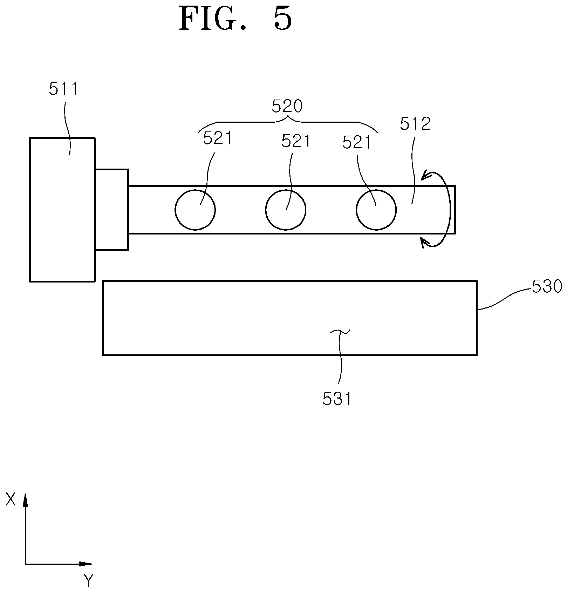

FIG. 3 is a front view schematically illustrating a configuration of a discharge unit according to an embodiment of the present disclosure; FIG. 4 is a side view schematically illustrating the configuration of the discharge unit according to an embodiment of the present disclosure; and FIG. 5 is a plan view schematically illustrating the configuration of the discharge unit according to an embodiment of the present disclosure.

Referring to FIGS. 1 to 5, the discharge unit 500 may include an adjustment member 510, a separation member 520, and a collection member 530.

The adjustment member 510 may be movably installed between the supply unit 100 and the stack table 200, for example, between the alignment table 410 and the stack table 200. The adjustment member 510 may adjust a position of the separation member 520, which will be described below, by movement of the adjustment member 510.

The adjustment member 510 may include a first adjustment member 511 and a second adjustment member 512.

The first adjustment member 511 may be installed between the supply unit 100 and the stack table 200 to be movable up and down. That is, the first adjustment member 511 may adjust a height of the separation member 520, which will be described below, by upward and downward movement. For example, the first adjustment member 511 may be installed between the alignment table 410 and the stack table 200 to be movable up and down along the Z-axis direction. However, a specific shape of the first adjustment member 511 is not limited to the shape shown in FIGS. 3 to 5, and various design changes are possible within the technical concept of a shape which is movable (e. g., smoothly movable) up and down without interfering with the alignment table 410 and the stack table 200.

The second adjustment member 512 may be rotatably connected to the first adjustment member 511. That is, the second adjustment member 512 may adjust an angle of the separation member 520, which will be described below, by rotational movement. For example, the second adjustment member 512 may have the form of a rod extending from the first adjustment member 511. The second adjustment member 512 may be installed to be rotatable about a direction crossing the upward and downward movement direction of the first adjustment member 511. For example, the second adjustment member 512 may be arranged such that a longitudinal direction is parallel with the Y-axis direction, and may be connected to the first adjustment member 511 so as to rotate about the Y-axis direction. Accordingly, the second adjustment member 512 may be prevented from interfering with the alignment table 410 and the stack table 200 arranged along the X-axis direction.

The separation member 520 may separate the electrode plate 10 from the transfer unit 300. The separation member 520 may be connected to the adjustment member 510, and a position of the separation member 520 may be changed in conjunction with the movement of the adjustment member 510.

In an embodiment, the separation member 520 may include an adsorption member 521.

In an embodiment, the adsorption member 521 may have the form of a rod extending from the second adjustment member 512 along a radial direction of the second adjustment member 512. The adsorption member 521 may be formed such that an inside may be hollow and both, or opposite, end portions may be open. The adsorption member 521 may be connected to a vacuum pump (not shown) separately installed outside the adjustment member 510, and may generate vacuum pressure by driving the vacuum pump.

An end portion of the adsorption member 521 may come into contact with the electrode plate 10 disposed under the transfer unit 300 by the upward and downward movement of the first adjustment member 511 and the rotational movement of the second adjustment member 512. The electrode plate disposed under the transfer unit 300 may be adsorbed to an end portion of the adsorption member 521 by the vacuum pressure generated in the adsorption member 521 and may be separated from the transfer unit 300.

In an embodiment, the adsorption member 521 may have a larger cross-sectional area toward the end portion. Accordingly, the adsorption member 521 may adsorb the electrode plate 10 strongly by an increased contact area with the electrode plate 10.

In an embodiment, the adsorption member 521 may be provided to be elastically deformable. For example, the adsorption member 521 may be formed of an elastically deformable material, such as rubber, silicone, or the like. Accordingly, the adsorption member 521 may be in close contact with the surface of the electrode plate 10 without a gap.

In an embodiment, a plurality of adsorption members 521 may be provided. The plurality of adsorption members 521 may be arranged along a longitudinal direction of the second adjustment member 512. However, a number of adsorption members 521 is not limited to three, as shown in FIGS. 3 to 5, and design changes to various numbers are possible. In an embodiment, the adsorption member 521 may be detachably connected to the second adjustment member 512 through any of various types of coupling methods, such as screw coupling, fit coupling, and the like. Accordingly, a number and spacing of the plurality of adsorption members 521 may be freely adjusted according to an area and shape of the electrode plate 10.

The collection member 530 may be spaced apart from the adjustment member 510 and may collect the electrode plate 10 separated by the separation member 520. The collection member 530 may have the form of a box in which an inside is empty and a collection hole, or opening, 531 is formed in an upper surface. The collection member 530 may be disposed under the adsorption member 521 and between the alignment table 410 and the stack table 200. Accordingly, as the vacuum pressure formed in the adsorption member 521 is removed, the electrode plate 10 which drops from the adsorption member 521 may be received into the collection hole 531 by a weight of the electrode plate 10 without a separate device. In an embodiment, the collection hole 531 may be disposed to perpendicularly face an end portion of the electrode plate 10 as the adsorption member 521 rotates by a certain angle (e. g., a set angle) in a state in which the electrode plate 10 transferred by the transfer unit 300 is adsorbed. For example, the collection hole 531 may be disposed parallel to an X-Y plane and disposed to perpendicularly face the end portion of the electrode plate 10 as the adsorption member 521 rotates 90° in the state in which the electrode plate 10 transferred by the transfer unit 300 is adsorbed.

In an embodiment, a cross-sectional area of the collection member 530 may increase toward the collection hole 531. Accordingly, the collection member 530 may induce the electrode plate 10 to be more easily received into the collection hole 531.

The control unit 600 may control the operations of the transfer unit 300 and the discharge unit 500 based on information about whether the electrode plate 10 sensed by the sensing unit 400 is defective. The control unit 600 may determine whether the electrode plate 10 currently transferred by the transfer unit 300 is a normal electrode plate or a defective electrode plate based on the information of the exterior of the electrode plate 10 sensed by the sensing unit 400. If it is determined that the electrode plate 10 seated on the alignment table 410 is a normal electrode plate, the control unit 600 may operate the transfer unit 300 such that the electrode plate 10 may be stacked on the stack table 200. If it is determined that the electrode plate 10 seated on the alignment table 410 is a defective electrode plate, the control unit 600 may operate the discharge unit 500 to discharge the electrode plate 10 from the transfer unit 300.

In an embodiment, the control unit 600 may be implemented as an electronic control unit (ECU), a central processing unit (CPU), a processor, or a system on chip (SOC) electrically connected to the transfer unit 300, the sensing unit 400, and the discharge unit 500, and may run an operating system or application to control a plurality of hardware or software components, and perform various types of data processing and calculations. The control unit 600 may be configured to execute at least one command stored in a memory and store execution result data in the memory.

Herein, a secondary battery manufacturing method according to an embodiment of the present disclosure will be described.

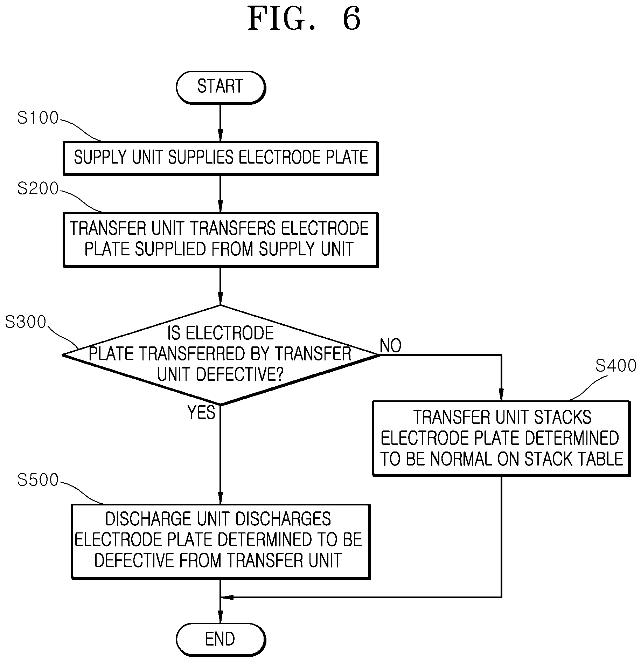

FIG. 6 is a flowchart schematically illustrating a sequence of a secondary battery manufacturing method according to an embodiment of the present disclosure.

Referring to FIG. 6, first, the supply unit 100 may supply the electrode plate 10 (S100).

In operation S100, in an embodiment, the supply unit 100 may continuously supply a plurality of electrode plates 10 at certain time intervals (e.g., set time intervals).

Thereafter, the transfer unit 300 transfers the electrode plate 10 supplied from the supply unit 100 (S200).

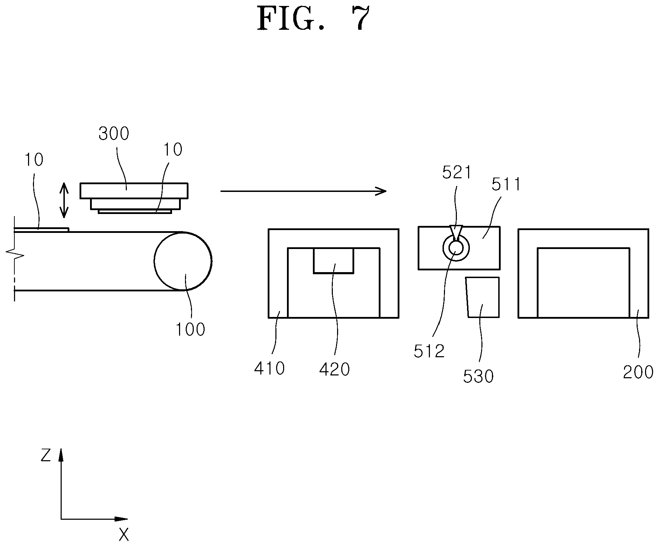

FIG. 7 is a view schematically illustrating a process by which the transfer unit transfers the electrode plate supplied from the supply unit.

Describing operation S200 in further detail with reference to FIG. 7, the transfer unit 300 is moved to a position facing the electrode plate 10 supplied from the supply unit 100 and then moved downward toward the electrode plate 10.

As the transfer unit 300 is moved downward by a distance (e.g., a set distance) or more, the transfer unit 300 comes into contact with the electrode plate 10.

In an embodiment, the transfer unit 300 generates vacuum pressure to adsorb the electrode plate 10 while in contact with the electrode plate 10.

The transfer unit 300 is moved upward while adsorbing the electrode plate 10 and transfers the electrode plate 10 while moving in a direction toward the stack table 200 from the supply unit 100.

After operation S200, the sensing unit 400 and the control unit 600 determine whether the electrode plate 10 transferred by the transfer unit 300 is defective (S300).

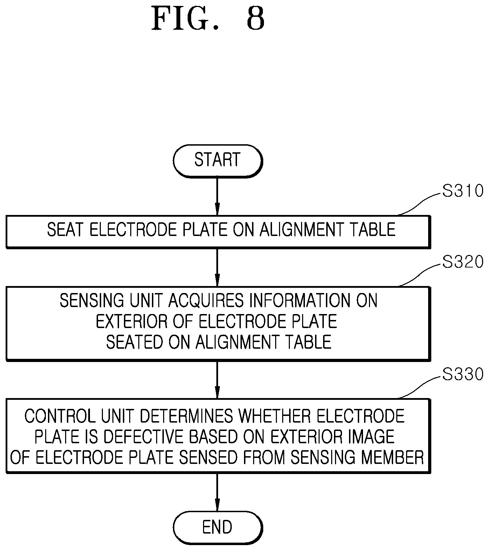

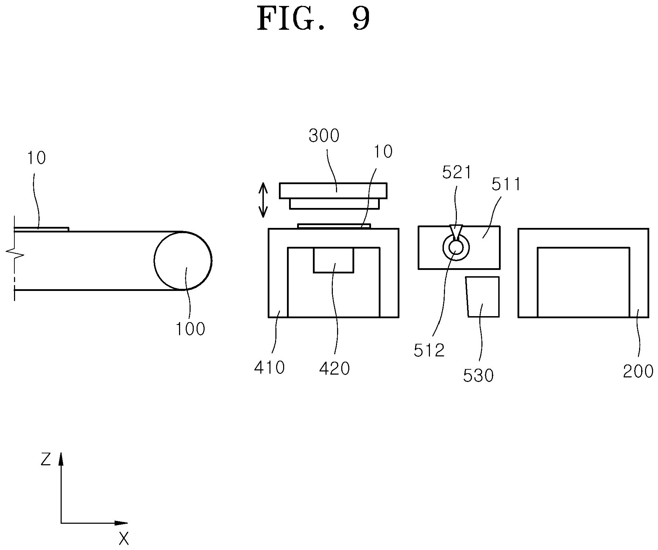

FIG. 8 is a flowchart schematically illustrating a sequence of operations for determining whether the electrode plate transferred by the transfer unit is defective; and FIG. 9 is a view schematically illustrating a process of determining whether the electrode plate transferred by the transfer unit is defective.

Describing operation S300 in further detail with reference to FIGS. 8 and 9, the transfer unit 300 is moved to an upper side of the alignment table 410, and the electrode plate 10 is seated on the alignment table 410 (S310).

The sensing member 420 acquires information of the exterior of the electrode plate 10 seated on the alignment table 410 (S320). For example, in operation S320, the sensing member 420 may acquire the information of the exterior of the electrode plate 10 in the form of a three-dimensional image by photographing the electrode plate 10 seated on the alignment table 410.

In an embodiment, the control unit 600 may determine whether the electrode plate 10 is defective based on an exterior image of the electrode plate 10 from the sensing member 420 (S330). For example, in operation S330, the control unit 600 may determine that the electrode plate 10 is normal when external defects, such as bending, wrinkles, cracks, and the like, are not present in the electrode plate 10. On the other hand, the control unit 600 may determine that the electrode plate 10 is defective when external defects, such as bending, wrinkles, cracks, and the like, are present in the electrode plate 10.

After operation S330, the control unit 600 may operate the transfer unit 300 such that the transfer unit 300 may adsorb the electrode plate 10 seated on the alignment table 410 again.

If the electrode plate 10 transferred by the transfer unit 300 is determined to be normal in operation S300, the transfer unit 300 may stack the electrode plate 10 on the stack table 200 (S400).

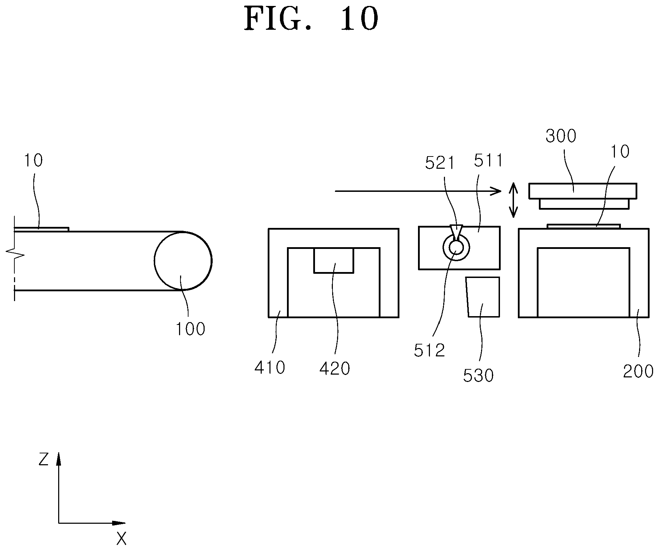

FIG. 10 is a view schematically illustrating a process by which the transfer unit stacks the electrode plates on the stack table.

Describing operation S400 in further detail with reference to FIG. 10, the control unit 600 may move the transfer unit 300 to a position facing an upper side of the stack table 200 when the electrode plate 10 seated on the alignment table 410 is determined to be normal.

Thereafter, the transfer unit 300 may stack the electrode plate 10 on the stack table 200.

If the electrode plate 10 transferred by the transfer unit 300 is determined to be defective in operation S300, the discharge unit 500 may discharge the electrode plate 10 from the transfer unit 300 (S500).

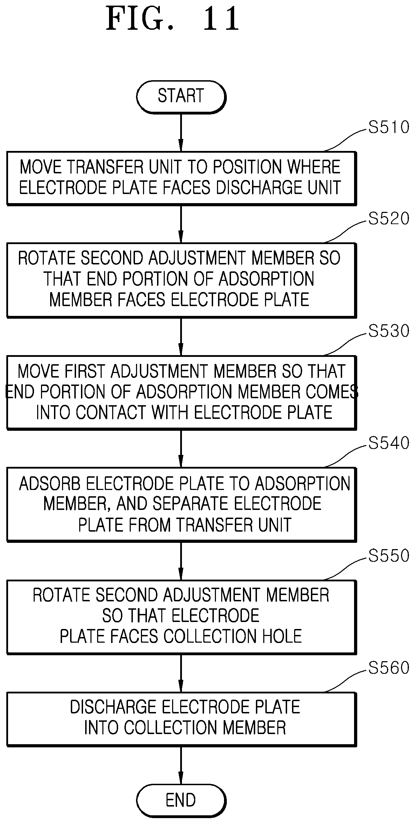

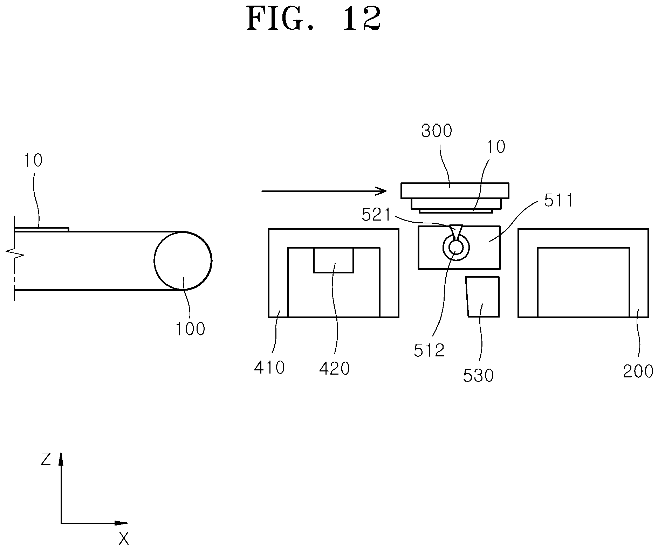

FIG. 11 is a flowchart schematically illustrating a sequence of operations in which the discharge unit discharges the electrode plate from the transfer unit; and FIGS. 12 to 15 are views schematically illustrating a process by which the discharge unit discharges the electrode plate from the transfer unit.

Referring to FIGS. 11 to 15, the control unit 600 may operate the transfer unit 300 such that the electrode plate 10 may be moved to a position facing the discharge unit 500 when the electrode plate 10 seated on the alignment table 410 is determined to be defective (S510).

For example, the transfer unit 300 may be moved to a position facing the discharge unit 500 disposed between the stack table 200 and the alignment table 410 after adsorbing the electrode plate 10 seated on the alignment table 410.

As the transfer unit 300 is disposed to face the discharge unit 500, the control unit 600 rotates the second adjustment member 512 such that the end portion of the adsorption member 521 faces the electrode plate 10 transferred by the transfer unit 300 (S520).

The control unit 600 moves the first adjustment member 511 upward such that the end portion of the adsorption member 521 comes into contact with the electrode plate 10 (S530).

Thereafter, the control unit 600 forms vacuum pressure in the adsorption member 521 such that the electrode plate 10 is adsorbed to the adsorption member 521, and releases the vacuum pressure formed in the transfer unit 300 such that the electrode plate 10 is separated from the transfer unit 300 (S540).

In an embodiment, the control unit 600 moves the transfer unit 300 upward and rotates the second adjustment member 512 such that the end portion of the electrode plate 10 perpendicularly faces the collection hole 531 (S550).

Thereafter, as the adsorption member 521 releases the vacuum pressure, the electrode plate 10 may drop by its own weight and may be discharged to the inside of the collection member 530 through the collection hole 531 (S560).

Thereafter, the control unit 600 returns the transfer unit 300 to an upper side of the supply unit 100, and repeatedly performs the above-described operations.

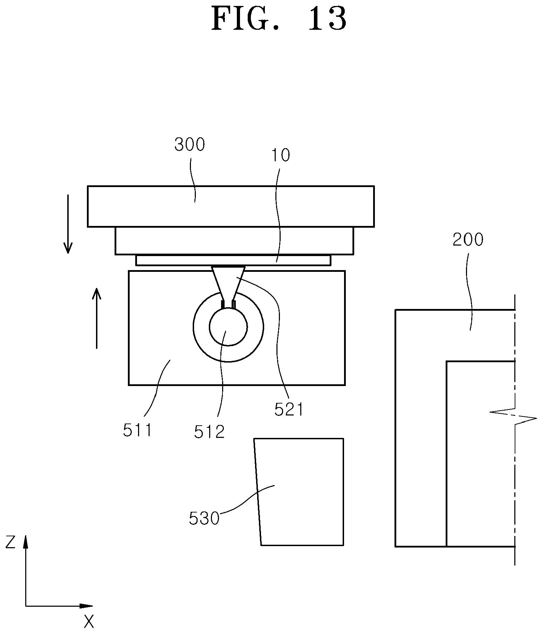

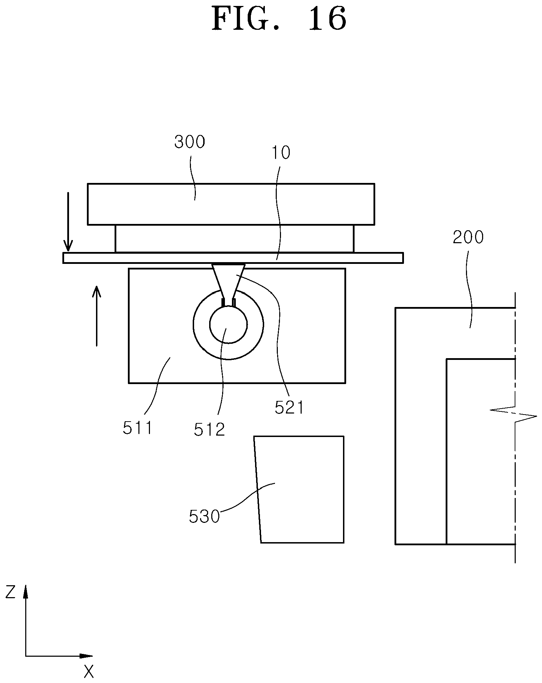

FIGS. 16 to 18 are views schematically illustrating operations when a width of the electrode plate exceeds a certain size (e.g., a set size) in FIG. 13.

Referring to FIGS. 16 to 18, if a width of the electrode plate 10 is excessively large, there is a risk of the electrode plate 10 being interfered with by adjacent components such as the stack table 200 and the like when the second adjustment member 512 rotates.

In an embodiment, the control unit 600 may move the first adjustment member 511 upward by a height (e.g., a set height) in a state in which the electrode plate 10 is adsorbed to the adsorption member 521 when a width of the electrode plate 10 crossing a longitudinal direction of the second adjustment member 512, that is, a width of the electrode plate 10 in parallel with the X-axis direction exceeds the size (e.g., the set size) based on FIG. 16. Here, various design changes of the set height are possible within a height range in which the end portion of the electrode plate 10 is not interfered with by the stack table 200.

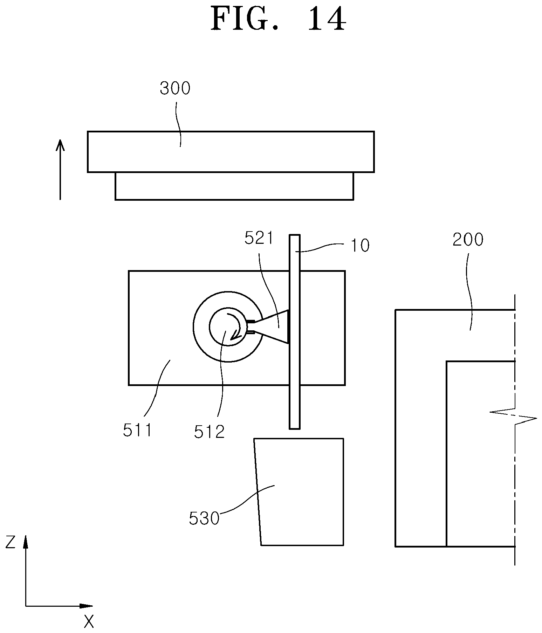

Thereafter, in an embodiment, the control unit 600 rotates the second adjustment member 512 such that the end portion of the electrode plate 10 perpendicularly faces the collection hole 531, as shown in FIG. 14.

As the adsorption member 521 releases the vacuum pressure, the electrode plate 10 may drop by its own weight and may be discharged to the inside of the collection member 530 through the collection hole 531.

Herein, a secondary battery manufacturing apparatus according to another embodiment of the present disclosure will be described.

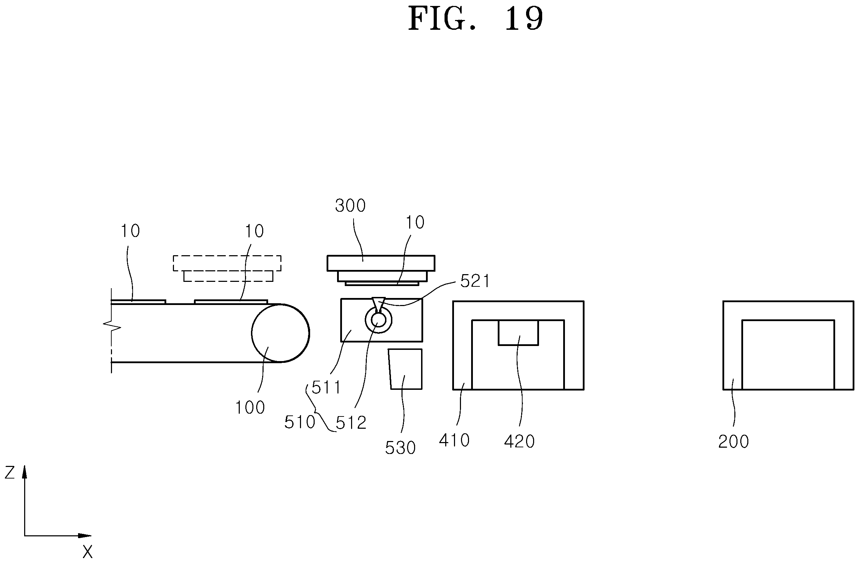

FIG. 19 is a view schematically illustrating a configuration of a secondary battery manufacturing apparatus according to another embodiment of the present disclosure.

The secondary battery manufacturing apparatus according to another embodiment of the present disclosure may be configured to differ from the secondary battery manufacturing apparatus according to the embodiment of the present disclosure described based on FIGS. 1 to 15 in terms of a position of the discharge unit 500.

Accordingly, in describing the secondary battery manufacturing apparatus according to the present embodiment of the present disclosure, only the position of the discharge unit 500, which is different from that in the secondary battery manufacturing apparatus according to the previously described embodiment of the present disclosure, will be described.

Referring to FIG. 19, the discharge unit 500 according to the present embodiment may be disposed between the supply unit 100 and the alignment table 410. That is, the first adjustment member 511 may adjust a height of the adsorption member 521 while being moved up and down between the supply unit 100 and the alignment table 410. Further, the collection member 530 may collect the electrode plate 10 separated from the transfer unit 300 between the supply unit 100 and the alignment table 410.

Although the present disclosure has been described with reference to some embodiments shown in the drawings, these are provided as examples, and it is to be understood by those skill in the art that various modifications and equivalents are possible. Accordingly, the technical scope of the present disclosure is defined by the independent claims.

## Claims

1. A secondary battery manufacturing apparatus comprising:
a supply unit (100) configured to supply an electrode plate (10);
a stack table (200) spaced apart from the supply unit (100) and on which the electrode plate (10) is configured to be stacked;
a transfer unit (300) movably arranged outside the supply unit (100) and the stack table (200) and configured to transfer the electrode plate (10) supplied from the supply unit (100) to the stack table (200);
a sensing unit (400) configured to sense defects in the electrode plate (10) transferred by the transfer unit (300);
a discharge unit (500) between the supply unit (100) and the stack table (200) and configured to discharge the electrode plate (10) from the transfer unit (300); and
a controller (600) configured to control operations of the transfer unit (300) and the discharge unit (500) based on information sensed by the sensing unit (400).

2. The secondary battery manufacturing apparatus according to claim 1, wherein the sensing unit (400) comprises:
an alignment table (410) between the supply unit (100) and the stack table (200) and on which the electrode plate (10) is configured to be seated; and
a sensing member (420) arranged to face the alignment table (410) and configured to acquire information of an exterior of the electrode plate (10) seated on the alignment table (410).

3. The secondary battery manufacturing apparatus according to claim 2, wherein the discharge unit (500) is between the alignment table (410) and the stack table (200).

4. The secondary battery manufacturing apparatus according to claim 2, wherein the discharge unit (500) is between the alignment table (410) and the supply unit (100).

5. The secondary battery manufacturing apparatus according to any one of claims 1 to 4, wherein the discharge unit (500) comprises:
an adjustment member (510) movably arranged between the supply unit (100) and the stack table (200);
a separation member (520) of which a position is variable in conjunction with movement of the adjustment member (510) and configured to separate the electrode plate (10) from the transfer unit (300); and
a collection member (530) spaced apart from the adjustment member (510) and configured to collect the electrode plate (10) separated by the separation member (520).

6. The secondary battery manufacturing apparatus according to claim 5, wherein the adjustment member (510) comprises:
a first adjustment member (511) arranged between the supply unit (100) and the stack table (200) to be movable up and down; and
a second adjustment (512) member rotatably connected to the first adjustment member (511) and configured to support the separation member (520).

7. The secondary battery manufacturing apparatus according to claim 6, wherein the second adjustment member (512) is rotatable about a direction crossing an upward and downward movement direction of the first adjustment member (511).

8. The secondary battery manufacturing apparatus according to claim 6 or 7, wherein the separation member (520) comprises an adsorption member (521) extending from the second adjustment member (512) and configured to generate vacuum pressure to adsorb the electrode plate (10).

9. The secondary battery manufacturing apparatus according to claim 8, wherein the adsorption member (521) comprises a plurality of adsorption members, and
adsorption members of the plurality of adsorption members are arranged along a longitudinal direction of the second adjustment member (512).

10. The secondary battery manufacturing apparatus according to claim 8 or 9, wherein a cross-sectional area of the adsorption member (521) becomes wider toward an end portion thereof.

11. The secondary battery manufacturing apparatus according to any one of claims 8 to 10, wherein the adsorption member (521) is elastically deformable.

12. The secondary battery manufacturing apparatus according to any one of claims 8 to 11, wherein the adsorption member (521) is detachably connected to the second adjustment member (512).

13. The secondary battery manufacturing apparatus according to any one of claims 8 to 12, wherein the collection member (530) is arranged under the adsorption member (521).

14. The secondary battery manufacturing apparatus according to claim 13, wherein the collection member (530) comprises a collection opening (531) into which the electrode plate (10) dropping from the adsorption member (521) is receivable.

15. A secondary battery manufacturing method comprising:
supplying (S100), by a supply unit (100), an electrode plate (10);
transferring (S200), by a transfer unit (300), the electrode plate (10) supplied by the supply unit (100);
determining (S300), whether the electrode plate (10) transferred by the transfer unit (300) is defective;
stacking (S400), by the transfer unit (300), the electrode plate (10) on a stack table (200) when the electrode plate (10) transferred by the transfer unit (300) is determined to be normal; and
discharging (S500), by a discharge unit (500), the electrode plate (10) from the transfer unit (300) when the electrode plate (10) transferred by the transfer unit (300) is determined to be defective.
